Europäisches Patentamt

European Patent Office

Office européen des brevets

(11) Veröffentlichungsnummer : **0 466 641 A2**

# (12) EUROPÄISCHE PATENTANMELDUNG

(21) Anmeldenummer : **91810479.5**

(22) Anmeldetag : **20.06.91**

(51) Int. Cl.⁵ : **G02B 27/46, G06E 3/00**

(30) Priorität : **09.07.90 DD 342608**

(43) Veröffentlichungstag der Anmeldung :
**15.01.92 Patentblatt 92/03**

(84) Benannte Vertragsstaaten :
**AT BE FR GB IT NL**

(71) Anmelder : **Jenoptik Jena G.m.b.H.**
**Carl-Zeiss-Strasse 1**
**O-6900 Jena (DE)**

(72) Erfinder : **Thorwirth, Günter**
**Josef-Klose-Strasse 12**
**W-6902 Jena (DE)**

(74) Vertreter : **Tschudi, Lorenz et al**
**Bovard AG Patentanwälte VSP**
**Optingenstrasse 16**
**CH-3000 Bern 25 (CH)**

(54) **Anordnung zur inkohärent-strukturzonalen Fourieranalyse von optisch darstellbaren Informationen.**

(57)   Die Erfindung betrifft eine Anordnung zur inkohärent-strukturzonalen Fourieranalyse von optisch darstellbaren Informationen zum Zwecke der Klassifizierung von Objekten. Sie ist anwendbar in Biologie, Medizin und Umweltschutz zur Beurteilung von Proben und Präparaten sowie in der Robotertechnik für Sortier- und Auswahlprozesse.

   Erfindungsgemäß werden die strukturzonalen Meßwerte mittels einer örtlich inkohärent strahlenden Fläche (41) festgelegter Form und deren Abbildung über einen Information (11) tragenden Bildwandler auf eine Anordnung von Sensorelementen (51), die in Anzahl, Form und Lage beliebig festgelegt sind, durch Integration über Gebiete, die durch Faltung der Geometrie von der strahlenden Fläche (41) und den einzelnen Sensorelementen (51) gebildet werden, zeitlich parallel mit günstigerer Energiebilanz und schneller ermittelt.

Fig. 1

EP 0 466 641 A2

Die Erfindung betrifft eine Anordnung zur inkohärent-strukturzonalen Fourieranalyse von optisch darstellbaren Informationen, insbesondere zum Zwecke der Bildverarbeitung durch Klassifizierung von Objekten. Die Erfindung ist auf dem Gebiet der Biologie, Medizin, des Umwelschutzes sowie deren Grenzgebieten, beispielsweise zur Beurteilung und Kontrolle biologischer und medizinischer Präparate, anwendbar. Insbesondere kann die Erfindung in der Medizintechnik zur Analyse von Zellproben, z. B. Auffinden von Krebszellen o. ä., und in der Mikroskopie zur Auswertung mikroskopischer Bilder eingesetzt werden.

Ein weiteres Anwendungsgebiet ergibt sich in optischen Sensoren für die Robotertechnik, die die Aufgabe haben, verschiedene Bauelemente oder sonstige Teile voneinander zu unterscheiden (Sortier- oder Auswahlprozesse). Weiterhin sind bestimmte Arten der Qualitätskontrolle, Luft- und Satellitenbildauswertung, sowie die Sicherungstechnik mögliche Anwendungsgebiete.

Nicht zuletzt läßt sich die Erfindung auch in der Akustik bei der Schallanalyse vorteilhaft einsetzen.

Bei der Verarbeitung von Informationen, wie sie auf vielen Gebieten der Technik in zunehmenden Maße notwendig wird, hat sich die Auswertung von Ortsfrequenzspektren der optischen Fouriertransformation bewährt.

Ein erstes auf kohärent-optischer Basis arbeitendes Gerät der Firma "Global Holonetics Corp." aus Fairfield/Iowa (USA) ist bekannt geworden in Lasers & Optronics, June 1988, 46-47. Anordnungen und Verfahren zur kohärenten strukturzonalen Analyse von Ortsfrequenzspektren werden u. a. beschrieben in Appl. Opt. 17 (1), 1978, 21; in Appl. Opt. 16 (10), 1977, 2637 und Avtometrija 1977 (5), 13.

Möglichkeiten zur inkohärenten strukturzonalen Analyse werden in der DD-PS 246 244 und in der DE-OS 38 10 639 offenbart, wobei hier mehrere verschieden strukturierte Flächenstrahler und/oder mit unterschiedlicher Lage seriell aufeinanderfolgend in einer Empfägerebene mit einem Einzelempfänger abgebildet werden. Die zum Erhalt signifikanter Meßwerte notwendige Änderung von Strukturzonen als unterschiedliche Integrationsgebiete des von der Objektstruktur gebeugten Lichtes wird in beiden Veröffentlichungen durch eine Variation der strahlenden Fläche der Beleuchtungseinrichtung erreicht. Das bedeutet für einen Echtzeit-Auswertemodus den Nachteil, daß diese Strukturzonen der Beleuchtungseinrichtung schnell und reproduzierbar schaltbar sein und eine hohe Strahlungsleistung zur Erreichung kurzer Integrationszeiten des Empfängers aufweisen müssen.

Zur Verbesserung der Energiebilanz der inkohärent-strukturzonalen Fourieranalyse der obengenannten Art ist aus der DE-OS 38 37 041 bekannt, angepaßte Formen von Flächenstrahler und Empfänger zu verwenden und diese parallel zueinander anzuordnen. Dabei werden streifenförmige Strahlerzonen und Lücken so angeordnet, daß die optische Achse die Grenzlinie zwischen mittlerer Strahlerzone und Lücke durchstößt. Hierbei wird jedoch lediglich die Empfängerfläche etwas vergrößert, die Nachteile bleiben im wesentlichen erhalten.

Es ist das Ziel der Erfindung, eine Möglichkeit zur inkohärentstrukturzonalen Fourieranalyse von optisch darstellbaren Informationen zu finden, die mit einfachen Mitteln eine schnellere und zuverlässigere Objektklassifizierung gestattet.

Der Erfindung liegt die Aufgabe zugrunde, eine neuartige Möglichkeit zur inkohärent-strukturzonalen Fourieranalyse von optisch darstellbaren Informationen zu realisieren, die die Energiebilanz bei der Ausnutzung des Ausleselichtes des Informationsträgers und das Verhältnis von Sensorintegrationszeiten zur Gesamtdauer des Auswerterprozesses verbessert.

Erfindungsgemäß wird die Aufgabe bei einer Anordnung zur inkohärent-strukturzonalen Fourieranalyse von optisch darstellbaren Informationen mit einer inkohärenten Lichtquelle, einem sammelnden optischen System, einem optisch auslesbaren Informationsträger und einem Empfänger, wobei der Informationsträger mit der auszuwertenden optisch darstellbaren Information versehen ist und die Lichtquelle über das optische System und den Informationsträger auf den Empfänger abgebildet ist, dadurch gelöst, daß die Lichtquelle eine örtlich inkohärent strahlende Fläche mit beliebiger, aber festgelegter Form aufweist und daß der Empfänger aus mehreren Sensorelementen besteht, deren Anzahl und Form sowie deren Anordnung zueinander in der Empfängerebene frei wählbar, aber starr ist, wobei die aus der Faltung der Geometrie der strahlenden Fläche mit den geometrischen Verhältnissen der Sensorelemente resultierenden Integrationsgebiete sich möglichst wenig überlappen.

Die strahlende Fläche der Lichtquelle wird vorteilhaft durch die Öffnung einer Glühlampe nachgeordneten Blende gebildet.

Eine weitere zweckmäßige Realisierungsform für die strahlende Fläche ist ein Lumineszenzdisplay.

Vorteilhaft wegen der besonderen Einfachheit ist eine strahlende Fläche, die durch den räumlich ausgedehnten Glühfaden einer Glühlampe, insbesondere einer Soffitte, erzeugt wird.

Für die Kombination Soffittenglühfaden und CCD-Zeile als Lichtquelle und Empfänger ist das Bild des Glühfadens in der Empfängerebene vorteilhaft senkrecht zur Richtung der CCD-Zeile angeordnet.

Die Erfindung basiert auf der Überlegung, daß die Energiebilanz der bekannten Anordnungen zur inkohärent-strukturzonalen Analyse deshalb ungünstig ist, weil seriell verschiedene Strahlerzonen eines Flächen-

2

strahlers angesteuert werden und für die Erfassung der gebeugten Strahlungsintensitäten lediglich ein Einzelempfänger zur Verfügung steht. Damit sind die Geschwindigkeiten und /oder Wahrscheinlichkeiten einer richtigen Objektklassifikation in erster Linie von der Integrationszeit des Empfängers abhängig.

Dieser Nachteil resultiert daraus, daß bisher die Integrationsgebiete für die Ortsfrequenzen durch die Form und/oder die Lage der strahlenden Zone eines Flächenstrahlers (bei punktförmigem Empfänger auf der optischen Achse) festgelegt war. Das ermöglicht eine Invarianz der strukturzonalen Meßwerte gegenüber Rotation eines Bildes um die optische Achse. Späterhin wurden zur Verbesserung der Energiebilanz nahezu stabile Bildlagen bezüglich Rotation um die optische Achse vorausgesetzt, die die zueinander senkrechten Ortsfrequenzkomponenten selbst zu invarianten Größen machen und die Verwendung spaltförmiger strahlender Flächen mit unterschiedlicher Lage und der vergrößerten spaltförmigen Fläche eines Einzelempfängers gestatteten, wobei die Bilder der strahlenden Spalte parallel zum Empfängerspalt angeordnet sein mußten.

Der o. g. Nachteil wird gemäß der Erfindung beseitigt, indem die Integrationsgebiete für die Ortsfrequenzen durch die Form der strahlenden Fläche und durch die Form und Lage der Sensorelemente, d. h. durch die Faltung der Geometrie der strahlenden Fläche mit der Geometrie und Lage der einzelnen Sensorelemente bestimmt sind. Damit ist die Integrationszeit durch die zeitlich parallele Integration der Sensorelemente für verschiedene Integrationsgebiete von Ortsfrequenzen wesentlich weniger kritisch, da die Auslesung der Sensorelemente entweder ebenfalls parallel oder Wenn seriell, dann in gegenüber der Integrationszeit sehr viel kleineren Zeiten erfolgen kann.

Mit der erfindungsgemäßen Anordung ist es möglich, eine zeitlich parallele Integration in verschiedenen Gebieten von Ortsfrequenzen eines zweidimensionalen Bildes als Meßreihe für die Auswertung entsprechend der Methode der strukturzonalen Analyse aufzunehemen und damit sowohl die Energiebilanz der Anordnung als auch das Verhältnis von Sensorintegrationszeit zur Gesamtdauer des Auswerteprozesses zu verbessern, wodurch sich die Genauigkeit und/oder die Wahrscheinlichkeit der richtigen Objektklassifizierung erhöhen.

Die Erfindung soll nachstehend anhand eines Ausführungsbeispiels näher erläutert werden. Die Zeichnungen zeigen:

Fig. 1 Die erfindungsgemäße Anordnung im Prinzipaufbau

Fig. 2 eine Variante der Erfindung mit einem in Reflexion ausgelesenen Informationsträger

Fig. 3 eine vorteilhafte Variante der Erfindung mit Soffitte und CCD-Zeilenkamera

Fig. 4 eine weitere mögliche Variante der Erfindung in Abwandlung des optischen Bildverarbeitungsblockes 9.

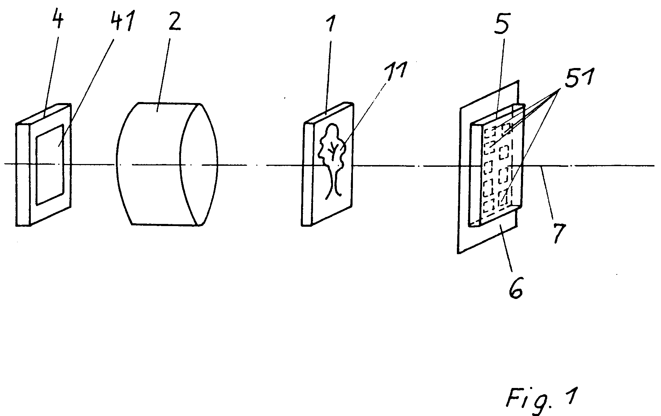

Die erfindungsgemäße Anordnung besteht in ihrem Grundaufbau - wie in Fig. 1 dargestellt - aus einem Informationsträger 1, der die optisch dargebotene Information 11 enthält, einem sammelnden optischen System 2, einem Strahlteiler 3, einer inkohärenten Lichtquelle 4 und einer Empfängeranordnung 5 mit mehreren Sensorelementen 51. Alle Bestandteile sind entlang einer optischen Achse 7 angeordnet, wobei die Lichtquelle 4 mit einer festgelgten strahlenden Fläche 41 über den Informationsträger 1 und das optische System 2 auf die Empfängeranordnung 5 abgebildet wird.

Als Informationsträger 1 eignen sich sowohl opto-optische, akusto-optische Bildwandler, elektro-optische Matrixanordnungen als auch transparente Bildvorlagen (Diapositive, Negativfilmmaterial, etc.)

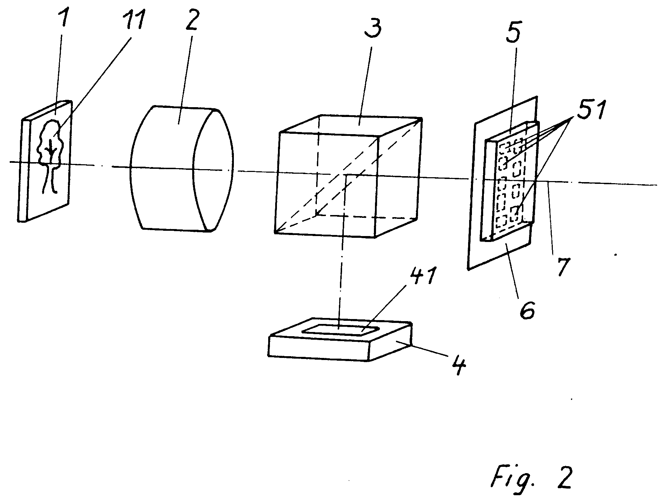

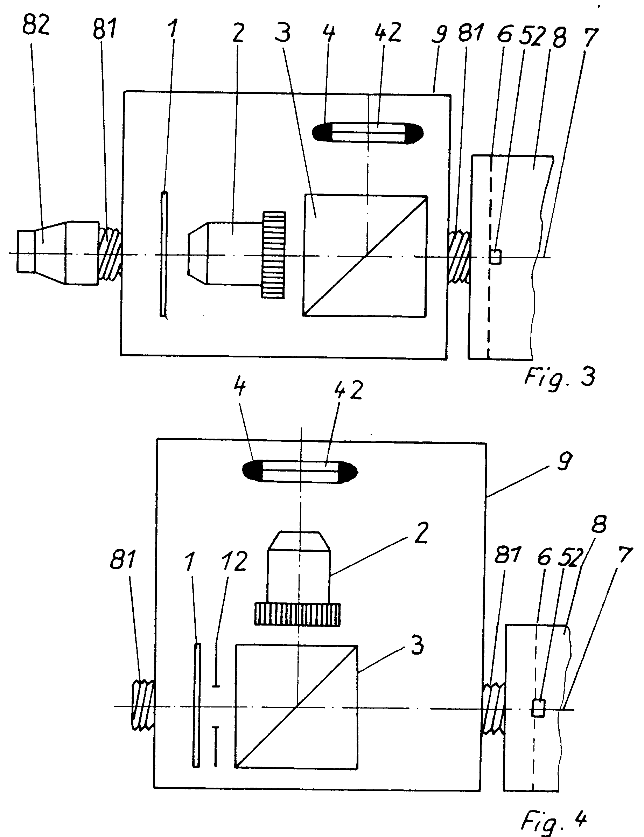

Fig. 2 zeigt eine Variante der Erfindung, die einen in Reflexion auslesbaren Informationsträger verwendet. Dadurch macht sich ein Strahlteiler 3 zur Aufspaltung des Beleuchtungs- und Reflexionsstrahlenganges erforderlich. Dabei wird die Lichtquelle 4 über den Strahlteiler 3 und das optische System 2, den reflektierenden Informationsträger 1 und erneut über optisches System 2 und Strahlteiler 3 auf die Empfängeranordung 5 abgebildet. Fig. 3 zeigt eine einfache Realisierungsmöglichkeit der erfindungsgemäßen Anordnung unter Verwendung einer kommerziell verfügbaren CCD-Zeilenkamera 8, wie sie z. B. bei potentiellen Anwendern der Erfindung bereits vorhanden sein könnte. Die CCD-Zeilenkamera 8 wird dazu von ihrem Aufnahmeobjektiv 82 getrennt und der optische Bildverarbeitungsblock 9 über Gewinde-Adapter 81 dazwischen angeordnet. Die Anschlußbedingungen und die Funktion für den optischen Bildverarbeitungsblock 9 ergeben sich dabei wie folgt. Der Informationsträger 1, in Form eines "Echtzeit"-Bildwandlers steht mit seiner Einschreibseite in der Bildebene des Aufnahmeobjektivs 82 und bekommt auf diese Weise die auszuwertende Bildinformation 11 aufgeprägt, die auf der anderen Seite in Reflexion auslesbar ist. In Fig. 3 ist der Informationsträger 1 bezüglich des optischen Systems 2 so positioniert, daß er in dessen Fokusebene steht und somit ein teleskopisches System entsteht, in dessen mittels des Strahlteilers 3 geschaffenen zwei örtlich getrennten Brennebenen einerseits die Lichtquelle 4 und andererseits die Empfängeranordnung 5 steht. Das bedeutet, daß die CCD-Zeile 52 der CCD-Zeilenkamera 8 (als konkrete Realisierung der frei wählbaren Anordnung von Sensorelementen 51) in der Bildebene 6, in die die wirksame Fläche der Lichtquelle 4 abgebildet wird, liegen muß.

Eine Realisierungsmöglichkeit für die strahlende Fläche 41 ergibt sich durch die Öffnung einer einer inkohärenten Lichtquelle nachgeordneten Blende. Eine zweite Variante der strahlenden Fläche 41 ist ein Elektrolumineszenzdisplay als Lichtquelle 4.

Eine besonders einfache Realisierung der strahlenden Fläche 41 ist der Glühfaden 42 einer Glühlampe, insbesondere einer Soffitte, wie in Fig. 3 dargestellt. Die große Ausdehnung des Glühfadens 42 bei einer Soffitte bringt den Vorteil, daß ohne jegliches strahlaufweitendes System gearbeitet werden kann und die Strahlungsenergie nur noch durch die endliche Apertur des optischen Systems 2 begrenzt wird.

Für die Entstehung einer signifikanten Meßwertreihe von Integrationswerten aus den Sensorelementen 51 der CCD-Zeile 52 sind das Bild des Glühfadens 42 und die Längsrichtung der CCD-Zeile 52 senkrecht zueinander orientiert, um eine Überlappung der Integrationsgebiete, die sich aus der Faltung der Form des Glühfadens 42 und der Form und Lage der Sensorelemente 51 der CCD-Zeile 52 ergeben, weitgehend zu vermeiden. Möglich ist jedoch jede beliebige Lage der CCD-Zeile 52 in der Bildebene 6, solange sich die Integrationsgebiete nich wesentlich überschneiden. Fig. 3 deutet die Ideallage der CCD-Zeile 52 bei der angegebenen Soffittenlage in senkrechter Richtung zur Zeichenebene an.

Der Glühfaden 42 ist direkt mit einer Spannungsquelle verbunden und sendet einen kontinuierlichen Lichtstrom aus. Die CCD-Zeile 52 wird in der üblichen Art und Weise entsprechend der Betriebsanleitung der CCD-Zeilenkamera 8 angesteuert, wobei lediglich darauf zu achten ist, daß die Auslesezeit klein gegenüber der Integrationszeit ist. Die ausgelesenen Meßwerte entsprechen den üblichen strukturzonalen Meßwerten, die entsprechend dem Stand der Technik der (inkohärenten oder kohärenten) strukturzonalen Fourieranalyse ausgewertet werden.

Der optische Bildverarbeitungsblock 9 muß nicht zwangsläufig, wie in Fig. 3 dargestellt, eine teleskpische Anordnung beinhalten, bei der sich der Informationsträger 1 in der einen und der Glühfaden 42 und die Sensorelemente 51 in der anderen Brennebene des optischen Systems 2 befinden, sondern die Stellung des Informationsträger 1 ist weitestgehend beliebig, solange die strahlende Fläche 41 scharf auf die Empfängeranordnung 5 abgebildet wird.

Ein Beispiel dafür bietet Fig. 4 an. Dabei wurden die Verwendung des Soffittenglühfadens 42 und der CCD-Zeilenkamera 8 beibehalten. Die angegebene Lösung ist besonders vorteilhaft für ein optisches System 2, dessen Hauptebenen außerhalb des Systems liegen. In diesem Fall ist der Informationsträger 1 in der einen und eine Blende 12 in üblicher Weise zur Begrenzung des Bildfeldes in der anderen Hauptebene des optischen Systems 2 angeordnet. Auch bei dieser Art des optischen Bildverarbeitungsblocks 9 findet eine Abbildung des Glühfadens 42 in die Bildebene 6 statt, in der die CCD-Zeile 52 ebenfalls wieder senkrecht zum Bild des Glühfadens 42 angeordnet ist.

## Patentansprüche

1. 1. Anordnung zur inkohärent-strukturzonalen Fourieranalyse von optisch darstellbaren Informationen mit einer inkohärenten Lichtquelle, einem sammelnden optischen System, einem optisch auslesbaren Informationsträger und einem Empfänger, wobei der Informationsträger mit der auszuwertenden Information versehen ist und die Lichtquelle über das optische System und den Informationsträger auf den Empfänger abgebildet ist, dadurch, gekennzeichnet,
daß die Lichtquelle eine inkohärent strahlende Fläche (41) mit beliebiger, aber festgelegter Form aufweist und daß der Empfänger aus mehreren Sensorelementen (51) besteht, deren Anzahl und Form sowie deren Anordnung zueinander in der Empfängerebene frei wählbar, aber starr ist, wobei die aus der Faltung der Geometrie der strahlenden Fläche (41) mit den geometrischen Verhältnissen der Sensorelemente (51) resultierenden Integrationsgebiete sich möglichst wenig überlappen.

2. Anordnung nach Anspruch 1, dadurch gekennzeichnet,
daß die strahlende Fläche (41) die Öffnung einer einer Glühlampe nachgeordneten Blende ist.

3. Anordnung nach Anspruch 1, dadurch gekennzeichnet,
daß die strahlende Fläche (41) ein Lumineszenzdisplay ist.

4. Anordnung nach Anspruch 1, dadurch gekennzeichnet,
daß die strahlende Fläche (4) der ausgedehnte Glühfaden (42) einer Glühlampe, insbesondere einer Soffitte, ist.

5. Anordnung nach Anspruch 1, dadurch gekennzeichnet,
daß der Empfänger eine CCD-Zeile (52) ist.

6. Anordnung nach Anspruch 5, dadurch gekennzeichnet,

daß der Empfänger eine kommerzielle CCD-Zeilenkamera (8) ist.

7. Anordnung nach Anspruch 4 und 5, dadurch gekennzeichnet, daß der Glühfaden (42) und die CCD-Zeile (52) so zueinander angeordnet sind, daß das Bild des Glühfadens (42) und die CCD-Zeile (52) senkrecht zueinander stehen.

Fig. 1

Fig. 2

Fig. 3

Fig. 4